# EUROPEAN PATENT APPLICATION

(11) **EP 1 505 794 A2**
(43) Date of publication of application: **09.02.2005**
(21) Application number: 04253562.5
(22) Date of filing: 15.06.2004
(51) Int. Cl.: H04L 29/06, G06F 17/60

(54) **Mobile applications**

(30) Priority: 31.07.2003 GB 0318000
(71) Applicant: NCR INTERNATIONAL INC., Dayton, Ohio 45479 (US)
(72) Inventor: Coutts, Michael, Dundee DD2 1LA (GB)
(74) Representative: Williamson, Brian

(57) **Abstract**

A mobile device (24), such as a mobile telephone, that includes a client application that has embedded or hard-coded code or instructions that are customised for a pre-determined user. Preferably, the client application is operable to present a customised user interface (26) to the user, in which the user's account nick-names are presented rather than the actual account numbers.

The customised code or instructions may include personalised information relating to financial services, and the nick-names may be allocated to specific financial instruments such as a bank account.

## Description

The present invention relates to a software application for use in a mobile device, such as a mobile telephone, and a mobile device that include such an application.

Mobile telephones are becoming increasingly sophisticated, many now allowing small applications to be loaded and run. For example, a range of mobile based games exists, some of which allow for collaborative gaming over the mobile network. Mobile applications are also being developed to allow users access to remote computer systems. Indeed, there is a drive towards allowing consumers to conduct banking activities using their mobile telephones. To this end, financial institutions are proposing supplying client based applications to allow users to review bank statements, transfer funds and pay bills using their mobile telephones. Another area where mobile applications are likely to be deployed may be productivity tools for corporate use, such as e-mail and schedule access, as well as tools to provide mobile sales staff with access into their corporate systems.

Traditionally mobile telephone based applications are created by a programmer who defines the needs of the user interface and how this will interact with some remote enterprise system over a wireless network. The code is then compiled and packaged into a format appropriate to the target environment. Where the user is given the ability to modify parts of the user interface then extra code is required to allow them to select the interface element they wish to modify with further code being required to let them change the interface element and then save their changes. For example, rather than having to use the account description used by the financial institution, such as: "Smith John George 1 PER BOS CURRENT ACCT PRODUCT A 00-00-00 01234567", the user may prefer to have it displayed more simply as: "Current Account". These changes need to be persistent so that the next time the user opens the application the interface is presented in the way they have chosen. A problem with this is, however, that it requires the use of local storage, which is at a premium in mobile devices.

An alternative approach to letting the user modify the interface at the mobile device is to allow the modification to be done at some central point. In this case, the mobile application would be adapted to load the interface changes across the wireless network each time the mobile application is operated. This provides for consistency across interaction points, so if a consumer was accessing their bank accounts via a mobile telephone based application, a self service terminal, such as an automated teller machine (ATM) and a web based home banking application they would be able to see their personalized description of each account presented at each interface. However, this approach requires extra code within the mobile telephone to obtain the interface information over the network connection and then use this to dynamically build the interface.

To interact with enterprise applications, such as on-line banking applications or indeed service applications provided on a corporate intranet, mobile applications typically use internet based technologies such as Web Services and TCP/IP over the wireless connection. For these applications, it is necessary that communications be kept secure to protect users and the corporate data. In order to provide for secure access to the corporate environment ideally, each individual user of a given mobile phone based application should have access to a personal digital certificate and public/private key for use in an encryption process. According to current practice, these certificates or keys would be held within the persistent storage area of the mobile phone and loaded into the application when required. However, as noted previously this storage area is extremely limited. Extra code would also be required to load the data across the wireless network and to save and retrieve it from the persistent storage area. As before, because of the limited storage and code space provided on a mobile telephone, this can be problematic.

An object of the invention is to overcome one or more problems with the prior art.

According to one aspect of the invention, there is provided a mobile device, such as a mobile telephone, that includes a client application that has code or instructions that are customised for a pre-determined user. Preferably, the client application is operable to allow communication between the mobile device and a remote system over the mobile communication network.

By providing an application in which user specific information is hard coded or embedded, there is provided a simple and effective mechanism for individually customizing the mobile interface, whilst minimizing the amount of code and local data storage needed to do so.

Preferably, the client application includes personalised information relating to financial services. For example, the personalised information may be predetermined nick-names that the user has allocated to his accounts. The personalised information may be the user's name.

Preferably, the client application includes user specific security information. This may be a digital certificate that is embedded directly within the application code. The certificate may be used to authenticate the individual user, thereby to allow access to a secure environment, such as a financial or corporate environment.

According to another aspect of the invention there is provided a client application for use in a mobile device, preferably on a data carrier or a computer readable medium, the client application including embedded or hard coded code or instructions that are customised for a pre-determined user.

The client application may include personalised information relating to financial services, such as one or more pre-determined nick-names that the user has allocated to specific financial instruments such as a bank account. Additionally or alternatively, the client application may include user specific security information, such as a digital certificate or an encryption key.

According to yet another aspect of the invention, there is provided a method for dynamically generating a client application comprising embedding user specific information in a client application. Preferably, the method involves searching for and retrieving the user specific information. Preferably, the step of searching involves interrogating a database.

According to still another aspect of the invention, there is provided a device for allowing access to financial accounts, the device being configured to:
retrieve one or more personalised account names for a pre-determined user, each personalised account name corresponding to a specified account and each being associated with an index or identifier that is different from the account number;
present a personalised interface to the user including the user's personalised account names;
receive a user request for services relating to a selected account;
identify the index or identifier for that account, and
transmit a signal to a remote system, which signal includes the index or identifier, to request the selected services relating to the selected account.

The device may be configured to retrieve the personalised information from a smart card. Additionally or alternatively, the device may be configured to retrieve the information from a remote server. Additionally or alternatively, the device may be configured to retrieve the information via a wireless connection.

The personalised information may include the index or identifier. Alternatively, the device may be configured to infer the index number from the order in which the personalised account names are provided.

According to a still further aspect of the invention, there is provided a mobile device, such as a mobile telephone or PDA or smart card, configured to provide the personalised account information, and optionally index information, for use by the device in accordance with the previous aspect of the invention.

Various aspects of the invention will now be described by way of example only and with reference to the accompanying drawings, of which:
Figure 1 is a block diagram of an enterprise system;
Figure 2 is an account table showing account details for a specific user;
Figure 3 is an index table that is associated with the table of Figure 2;
Figure 4 is code for implementing a user specific, customised application;
Figure 5 is a schematic diagram of a mobile telephone having a customised interface, and
Figure 6 is a schematic diagram showing how the mobile of Figure 5 may interact with a banking system.

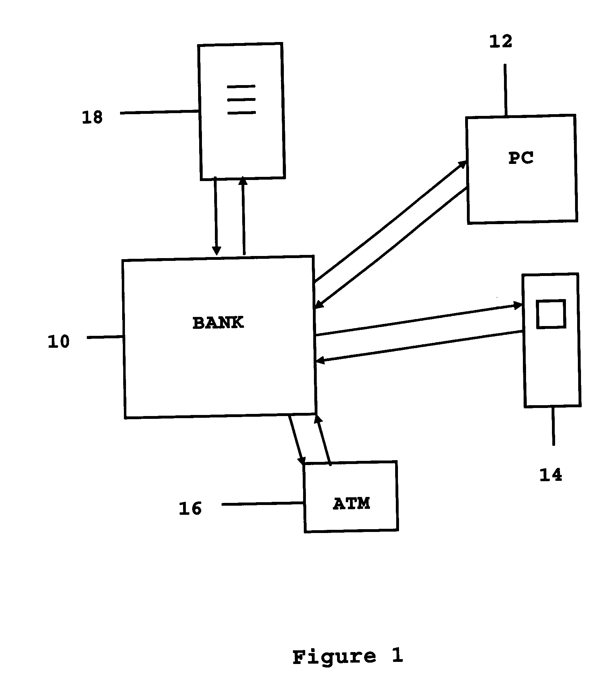

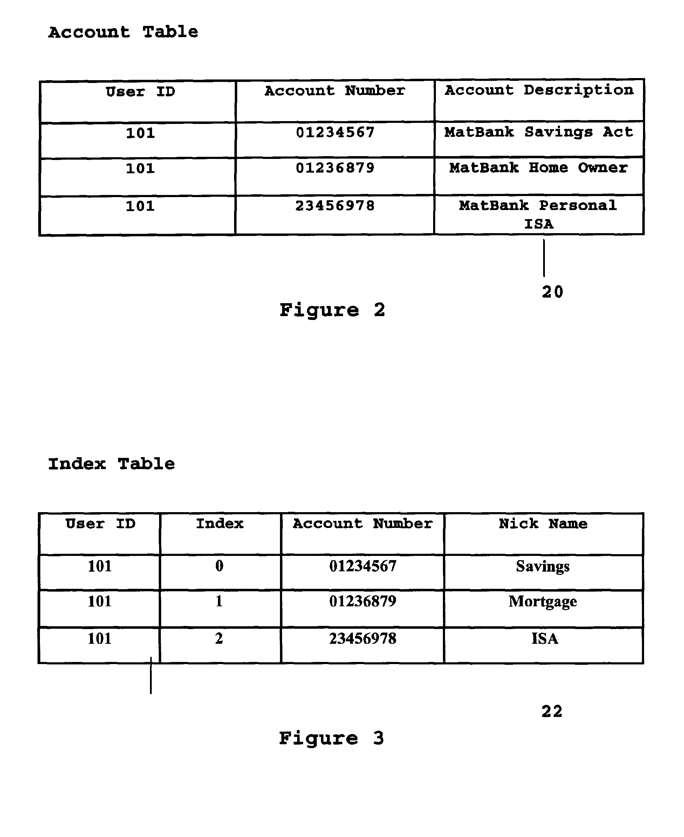

Figure 1 shows a computer-based enterprise system, such as a financial institution, more specifically a banking system 10, which can be accessed using an on-line PC 12 and/or a mobile telephone 14 and various self-service terminals 16, for example automated teller machines (ATM). Associated with the bank 10 is an account database 18 that includes the account records for a plurality of account holders. An account table 20 illustrating a portion of the account database 18 for a single user is shown in Figure 2. This has the following columns: "User ID", which includes a unique identifier for a given customer; "AccountNumber", which includes the numbers of the accounts held by the identified customer, and "Description", which includes the bank's description of the account, for example MatBank Savings-Act, etc.

Associated with the account table 20 is an index table 22. An example of this is shown in Figure 3. Like the account table 20, this has "User ID" and "Account Number" columns. Additionally, this table 22 has an "Index" column, which includes an index for each of the user accounts, in this case 0, 1 and 2, and a "Nick Name" column, which includes details of shortened or simplified names allocated to each account by the user. These nick names are entered or identified by the user during some form of initialisation or registration procedure, which may be implemented via an on-line home banking arrangement or a call centre-based telephone banking system. In any case, the user picks a name for each account and this is stored in the "Nick Name" column in the index table 22. Typically, as part of this initialisation process, the user is asked to select a preferred order in which the nick-names are to be presented, so that the account that they are likely to use most often is presented first on their list. The index numbers are then allocated depending on the selected order. For example, the index "0" may be allocated to the account that the user wants to be presented first on the list, the index "1" may be allocated to the account that is to be presented second on the list and so on. Once nick-names are chosen and stored, then any time the user accesses account details via the on-line channel, these names are presented to the user rather than the account numbers.

Also included in the bank's system is software for dynamically creating client applications for use in a user's mobile telephone. Ideally, these should be written in a language and manner to allow for over the air provisioning, although this is not essential. The client application is adapted to allow the user to access financial services, for example to select one of their accounts in order to then look at a statement or get the current account balance. Before allowing access to any detailed information, the client application is firstly operable to generate an interface asking the user to enter a password and/or a personal identification number (PIN). Once this is entered, the client application is operable to send a signal to the banking enterprise to notify it of the user's identity and set up a suitable communication link to access details of the user's various accounts.

In order to allow the interface presented to the user to be personalised, hard coded into the client application are details of the user's account and in particular the nick-names allocated by the user. This information is derived from the account and index tables 20 and 22 stored by the bank. In this way, the client application or at least part thereof can be personalised for the user for whom it is intended, without having to make excessive demands on the persistent storage space of the mobile device.

The majority of the code for the customised client application can be developed in a normal manner as it is only those sections of code that create personalized pieces of hard coded data that need to be generated dynamically based upon the bank/enterprise data. The client application can be written and compiled in any suitable language or format. As an example, a simple markup language may be used to create a mobile phone based application. The markup language may be used to generate Java based code acceptable to the Java 2 Micro Edition (J2ME) by using the JavaServerPages (JSP) and Java compilers.

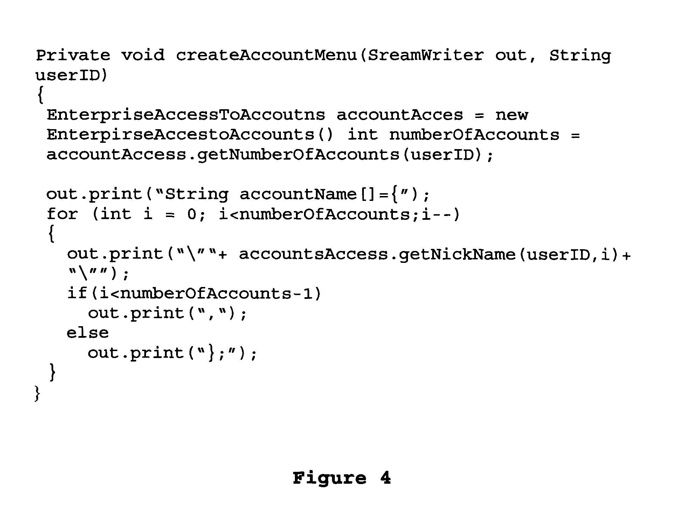

Figure 4 shows an example of Java based code that can be used to dynamically create a customised portion of the client application. When this code is run against the bank's account database 20 and index database 22, it generates the following Java code:
String accountName [] = {"Savings", "Mortgage" , "ISA"};
This dynamically generated code is compiled and linked with the rest of the client application code, and in particular the part of the client application code that is operable to prepare user interface menus. For Java based applications, compilation of the code is done by a standard Javac compiler under the direction of a Servlet that controls the creation of the application. This Servlet may be arranged to run any necessary obfuscation and packaging processes on the completed code before sending the completed package to an "over the air" provisioning mechanism for transmitting the newly personalized application to the consumer.

It should be noted that in the example described with reference to the coding of Figure 4, the order of the user-selected names within the string is associated with the index in the index table 22 stored at the bank. The client application is adapted to recognise that the account name "Savings" is associated with the index 0, the name "Mortgage" is associated with the index 1, and the name "ISA" is associated with the index 2. In communications with the banking enterprise server rather than using the user-selected names in communications, the client application is adapted to use the index numbers to identify the account that the user wishes to access.

As well as including predetermined account nicknames, the client application may include other personalised user information that can be derived from the bank's databases. For example, the user's name could be embedded within the client application code. In this case, the client application may be operable to present an interface to the user the first time the application is used, requesting entry of the user's name. When the name is entered, the client application is operable to check this against the user name embedded within it. In the event that the entered and embedded names do not match, the client application prohibits access to any of its functionality. Otherwise, the application allows the user to move to the next stage, which is typically entry of a personal identification number (PIN). By embedding the user name within the client application an initial security check is provided to ensure that the application was received by the correct person.

Once the client application is created, it is sent to the user's mobile device, where it is received. Once installed on the mobile, the client application is operable to act as a gateway to services provided by the bank. To access these services, the user has to firstly open the client application. Optionally, the user is asked to enter their name, which is compared with the user name embedded within the application. Assuming that the user name is verified, the client application then prompts the user to enter their PIN. Once this is done, the client application causes this to be sent to the banking system for verification. In the event that PIN is not verified, access to the system is denied. In the event that the PIN is verified, access to the user's account information is allowed. Once the user has been allowed access to the system, the client application then generates a suitable interface to allow the user to navigate round various different accounts and functional options. In accordance with the invention, this interface includes the personalised data that is hard coded into the client application.

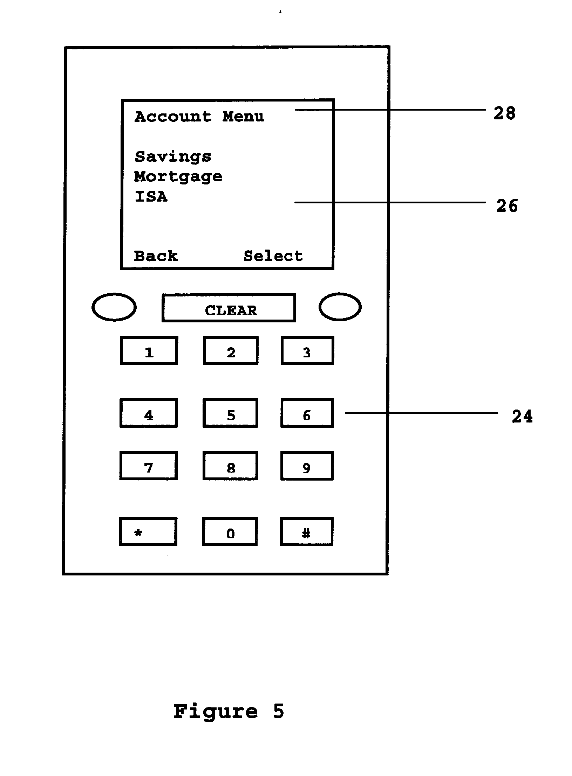

Figure 5 shows a mobile telephone 24 displaying an example of a customised user interface 26 for the user whose account details are shown in Figure 3. In this case, the Account menu 28 presented on the mobile includes the headings "Savings", "Mortgage" and "ISA" as defined by the user. This can be created using the accountName array generated when the client application was created. For example, the account menu could be created as follows:
AccountMenu = new List ("Account Menu", List.IMPLICIT, accountName, null)
By selecting one of the options in the menu 28, the user can access detailed financial information or other services relating to the selected account. To obtain this information, the client application is operable to send a request signal to the bank that includes the index for the selected account. This index can be determined by the client application with reference to the order of the selected option in the accountName string. In the example shown in Figure 5 the account "Savings" is selected, which is first in the accountName string and so has an index of 0. This index is used to identify the account of interest from the index table of Figure 3.

The client application may also be adapted to allow the user to pay bills. To do this, the application is operable to present a user interface that allows the selection of a particular account and then the option to authorise payment of a specified amount to a predetermined payee. To allow this, the pre-determined payees would have to be identified as part of the user registration process and then embedded within the client application.

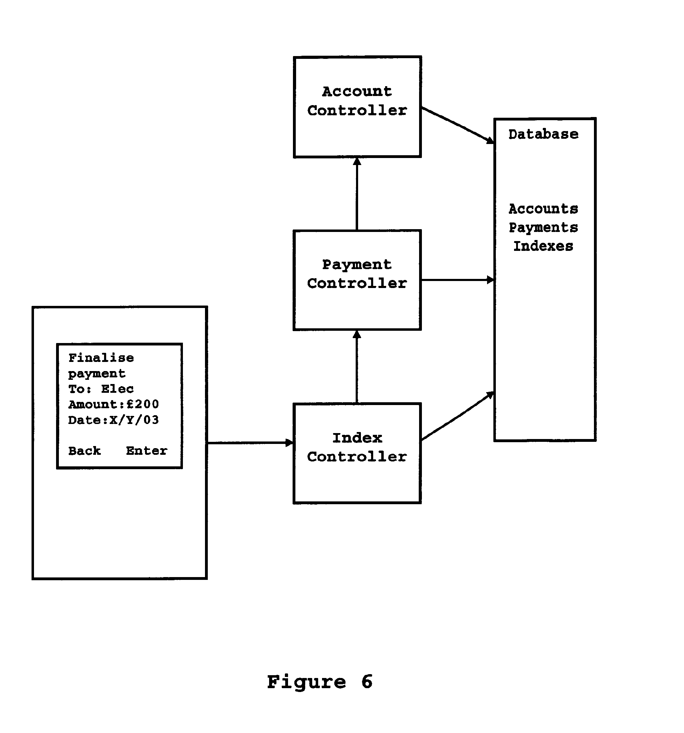

Figure 6 shows a mobile telephone screen using which a user is about to finalise a payment of £200 to an electricity company. When the user confirms that this is acceptable by, for example, selecting the "enter" option, a signal including details of the payment, such as the amount and the index of the account from which it is to be deducted, together with the user's ID number, is sent from the mobile device to an index controller in the bank's system. This controller uses the user's ID number to interrogate the relevant part of the index table in the bank's database to identify the account that corresponds to the index number received from the user. A command is then sent to a payment controller to cause the relevant payment to be made to the correct party. Once this is done, a command is sent to an account controller to ensure that a corresponding amount is deducted from the user's account. In this way, the entire transaction can be concluded, with the only user input needed being entered via the personalised interface on the mobile telephone, and without the need to transmit account details over the mobile network.

Because the client application is hard coded with user specific information and in particular the user's own names for the various accounts that they have access to, the account selection menu presented to the user is fully customised, without requiring the user to input any information. In this way, there is provided a mechanism to allow a bank to provide a uniform and personalised interface to the user, without having to use up excessive amounts of code or storage space on the mobile device.

As well as allowing for personalised user interfaces, the application in which the invention is embodied can be used to provide hard-coded security features that are unique to a pre-determined user either within the financial services network described previously or in a corporate access environment. In either case, a dynamically personalized application can be created by embedding security features within the application code. These features could for example be a digital certificate or a public/private key for use in an encryption process or even just a unique password for gaining access to the system.

As a specific example of a security feature, the client application may have embedded within it a random key value say String key = {"qw23Rt"}, which is selected by the banking system and is saved, for example, in the index table 22. The client application may be operable to use this key to encrypt the index numbers that are sent from the client application to the banking system when the user is trying to access services. This key may be used in conjunction with a session key that is issued by the bank when the user logs on to the application, providing a user name and password. When the client needs to send an index in order to get, say, account information, the client application is adapted to take the index value 0, 1 or 2 and encrypt it with the embedded key value and the session key value to create an encrypted index that only the bank should be able to decrypt back into the value 0, 1 or 2.

Whilst entering personalised information would usually done by the user, inclusion of security features may be done at the behest of a system administrator. For example, an administrator may wish to update the digital certificate or public/private key pair of an individual user or a group of users for a number of reasons. This may be desirable when it is believed that the existing certificates/keys have been compromised or it may just be part of normal processes. An administrator could assign new digital certificates or public/private keys to various individuals and then allow an automated batch process to run the necessary application provisioning for each user in turn. This would create the necessary personalized code segments in the same manner as illustrated above, writing digital certificate or public/private key pairs directly into the code before completing the application build and sending it for over the air provisioning. Of course, security concerns might not allow for over the air provisioning in which case the mobile user might be required to connect directly into the corporate network in order to retrieve their personalized application.

The client application described above makes use of a simple indexing system in order to provide a personalised user interface for the user and communicate with a remote server. However, the use of this technique has wider applicability. As noted previously, where the consumer has personalised their account and payee information through, for example, their financial institution's home banking web site, that customisation information could be made available to connected devices such as self service terminals, and in particular ATMs, associated with that institution. Hence, in the same way the client application described previously communicates account details using the index numbers, the ATMs could equally be arranged to do this. Likewise, the security features made possible through the use of simple indexes rather than full account name and numbers could be extended to "foreign" ATM's, that is ATMs not associated with the user's financial institution, while still allowing the consumer to have a personalised interface.

To allow foreign ATMs to provide a personalised interface and communicate financial details using the index numbers, the personalisation data could be downloaded to a smart card, which would typically also be the user's bank-card, or a personal trusted device (PDA/mobile phone) in order that it could subsequently be provided to the "foreign" ATM. Alternatively there could be some form of centralised personalisation server run by a third party that foreign ATM's could go to in order to get account nick-name and indexing information. In any case, the personalised information would typically include the consumer's "Nick Name" for each of their accounts plus the corresponding simple indexes, as well as the current version number used for account selection/encryption etc. As before, the indexes would dictate the order in which the account nick-names are to be presented. In addition, when the foreign ATM is to communicate with the user's financial institution, the user ID and the index numbers would be used to identify the relevant account. No details of the user's account number would be transmitted.

The present invention provides the ability to dynamically create personalized mobile phone based applications that minimize the use of code space, persistent storage and wireless network access while providing the consumer with a user friendly, familiar interface. It also allows the administrators of corporate enterprise systems to better secure these while allowing for increased access by mobile employees. Also, the invention provides consumers with the possibility of improved interaction with financial institutions by allowing their preferences to be reflected across the various end points of mobile-based applications, ATM's and web based home banking. It also provides an extra tool for the management of security mechanisms within both the consumer access and corporate enterprise access arenas.

A skilled person will appreciate that variations of the disclosed arrangements are possible without departing from the invention. Accordingly, the above description of the specific embodiment is made by way of example only and not for the purposes of limitation. It will be clear to the skilled person that minor modifications may be made without significant changes to the operation described.

## Claims

1. A mobile device, such as a mobile telephone, that includes a client application that has embedded or hard-coded code or instructions that are customised for a predetermined user.

2. A mobile device as claimed in claim 1, wherein the customised code or instructions include personalised information relating to financial services.

3. A mobile device as claimed in claim 2, wherein the personalised information includes one or more predetermined nick-names that the user has allocated to specific financial instruments such as a bank account.

4. A mobile device as claimed in any of the preceding claims, wherein the customised code or instructions include the user's name.

5. A mobile device as claimed in any of the preceding claims, wherein the customised code or instructions include user specific security data or information.

6. A mobile device as claimed in claim 5, wherein the security data or information is a digital certificate or a private key.

7. A client application for use in a mobile device, preferably on a data carrier or a computer readable medium, the client application including embedded or hard coded code or instructions that are customised for a predetermined user.

8. A client application as claimed in claim 7, wherein the customised code or instructions include personalised information relating to financial services.

9. A client application as claimed in claim 8, wherein the customised code or instructions include one or more pre-determined nick-names that the user has allocated to specific financial instruments such as a bank account.

10. A client application as claimed in any of claims 7 to 9, wherein the customised code or instructions include the user's name.

11. A client application as claimed in any of claims 7 to 10, wherein the customised code or instructions include user specific security data or information.

12. A client application as claimed in claim 11, wherein the security data or information is a key for use in an encryption process or a digital certificate.

13. A client application as claimed in any of claims 7 to 12 comprising code or instructions for using the customised information to create a personalised user interface.

14. A method for dynamically generating a client application comprising embedding user specific information in a client application.

15. A method as claimed in claim 14 comprising extracting user specific information from a database and embedding that information in the client application.

16. A method as claimed in claim 15 wherein the user specific information includes nick-names allocated by the user.

17. A method as claimed in any of claims 14 to 16 wherein the user specific information includes security data or information, for example a key for use in an encryption process or a digital certificate.

18. A device for allowing access to financial accounts, the device being configured to:
retrieve one or more personalised account names for a pre-determined user, each personalised account name corresponding to a specified account and each being associated with an index or identifier that is different from the account number;
present a personalised interface to the user including the user's personalised account names;
receive a user request for services relating to a selected account;
identify the index or identifier for that account, and
use that index or identifier to identify the selected account in communications with a remote system.

19. A device as claimed in claim 18 that is configured to retrieve the personalised information from a smart card.

20. A device as claimed in claim 18 or claim 19 that is configured to retrieve the information from a remote server.

21. A device as claimed in claim 18 or claim 19 or claim 20 that is configured to retrieve the information via a wireless connection.

22. A device as claimed in any of claims 18 to 21, wherein the personalised information includes the index or identifier.

23. A device as claimed in any of claims 18 to 21 that is configured to infer the index number from the order in which the personalised account names are provided.

24. A device as claimed in any of claims 18 to 23 that is a self service terminal, such as an automated teller machine.

25. A mobile device, such as a mobile telephone or PDA or smart card, that is configured to provide the personalised account information to the device as claimed in any of claims 18 to 23.

26. A method for allowing access to financial accounts, the method comprising:
retrieving one or more personalised account names for a pre-determined user, each personalised account name corresponding to a specified account and each being associated with an index or identifier that is different from the account number;
presenting a personalised interface to the user including the user's personalised account names;
receiving a user request for services relating to a selected account;
identifying the index or identifier for that account, and
using that index or identifier to identify the selected account in communications with a remote system.
